# EUROPÄISCHE PATENTSCHRIFT

(11) **EP 0 578 952 B1**
(45) Veröffentlichungstag und Bekanntmachung des Hinweises auf die Patenterteilung: **15.10.1997**
(21) Anmeldenummer: 93108715.9
(22) Anmeldetag: 29.05.1993
(51) Int. Cl.: G01N 29/10

(54) **Verfahren und Vorrichtung zum Starten einer Zeitblende bei der Ultraschall-Werkstoffprüfung**
Method and apparatus for initiating a time gate in ultrasonic examination of materials
Procédé et dispositif pour démarrer une fenêtre temporelle à l'examen ultrasonore de matériaux

(30) Priorität: 17.07.1992 DE 4223502
(43) Veröffentlichungstag der Anmeldung: 19.01.1994
(73) Patentinhaber: KRAUTKRÄMER GmbH & Co., D-50354 Hürth (DE)
(72) Erfinder: Freund, Alexander, W-5047 Wesseling (DE); Stahl, Ingo, W-5024 Pulheim (DE); Steinhoff, Norbert, W-5042 Erftstadt-Liblar (DE); Prause, Reinhard, W-5205 Sankt Augustin (DE)
(74) Vertreter: Bauer, Wulf, Dr.

(56) Entgegenhaltungen:
- EP-A- 0 193 924
- DE-A- 2 840 456
- GB-A- 1 545 324
- US-A- 3 646 805
- US-A- 4 150 577
- US-A- 4 395 911

## Beschreibung

Die Erfindung bezieht sich auf ein Verfahren nach dem Oberbegriff des Patentanspruchs 1 sowie auf eine nach diesem Verfahren arbeitende Vorrichtung.

Das Verfahren der eingangs genannten Art sowie eine nach diesem Verfahren arbeitende Vorrichtung sind aus der US-A-4 395 911 vorbekannt. Bei ihr erfolgt die Ankopplung der Prüfköpfe an ein Werkstück über Wasservorlaufstrecken, die seitlich durch längliche Rohre begrenzt sind. Dadurch läßt sich die vorbekannte Vorrichtung für Blechprüfung gut einsetzen, sie hat aber Nachteile beim Einsatz an gekrümmten Flächen, insbesondere Rohren, beispielsweise unrunden Rohren. Hier kommt es zu einem von der Krümmung abhängigen zeitlichen Versatz der empfangenen Signale, eine klare Zuordnung des Echosignals des senkrecht einschallenden Prüfkopfes zum Zeitpunkt des Startes der Fehlererwartungsblende des schräg einschallenden Prüfkopfes ist mit großen Schwierigkeiten verbunden.

Hier setzt nun die Erfindung ein. Sie hat es sich zur Aufgabe gemacht, die Echostartsteuerung für die Blendensetzung eines Fehlererwartungsbereichs oder eines anderen Zeitbereichs so zu verbessern, daß bei einem schräg einschallenden Prüfkopf eine möglichst gute Zuordnung zwischen Aussenden eines Schallimpulses und Beginn der Zeitblende, z. B. Fehlererwartungsblende erreicht wird.

Gelöst wird diese Aufgabe verfahrensmäßig durch ein Verfahren mit den Merkmalen des Anspruchs 1, vorrichtungsmäßig durch ein Verfahren mit den Merkmalen des Anspruchs 7.

Normalerweise ist es nicht notwendig, einen separaten, senkrecht einschallenden Prüfkopf ausschließlich für den Echostart der Zeitblende vorzusehen, vielmehr kann man zu diesem Zweck senkrecht einschallende Prüfköpfe verwenden, die ohnehin vorgesehen sind, beispielsweise für die Wanddickenmessung oder die Prüfung auf Kernfehler. Derartige Prüfköpfe sollten, um sie für den Echostart des Fehlererwartungsbereichs des schräg einschallenden Prüfkopfes einsetzen zu können, auf denselben Punkt der Oberfläche einschallen, auf den auch der schräg einschallende Prüfkopf einschallt. Unter diesen Umständen besteht in einem gewissen Bereich der Vorlaufstrecke eine Proportionalität zwischen Vorlauflänge des senkrecht einschallenden und Vorlauflänge des schräg einschallenden Prüfkopfes, so daß durch einfache Maßnahmen Änderungen der Vorlaufstrecke des senkrecht einschallenden Prüfkopfes umgesetzt werden können in Änderungen der Vorlaufstrecke des schräg einschallenden Prüfkopfes.

Als sehr vorteilhaft hat es sich erwiesen, jeweils zumindest das letzte, bekannte Echo des senkrecht einschallenden Prüfkopfes bei der Ermittlung des Schalleintrittsechos mit zu berücksichtigen. Bei einem Ausfall eines Eintrittsechos des senkrecht einschallenden Prüfkopfes wird dann bei taktweise arbeitenden Anlagen der Zeitpunkt des letzten, bekannten Eintrittsechos herangezogen, die Prüfung wird also nicht unterbrochen. Besonders vorteilhaft ist es, wenn eine gleitende Mittelwertbildung aus den letzten Echozeitpunkten stattfindet, um auf diese Weise die gemittelte Position des Eintrittsechos zu erhalten, wodurch wiederum die Festsetzung der Fehlererwartungsblende stabiler wird, also weniger hin- und herwandert bei jedem einzelnen Schuß.

Weitere Vorteile und Merkmale der Erfindung ergeben sich aus den übrigen Ansprüchen sowie der nun folgenden Beschreibung eines nicht einschränkend zu verstehenden Ausführungsbeispiels, das unter Bezugnahme auf die Zeichnung näher erläutert wird. In dieser zeigen:
- Fig. 1: eine Seitenansicht einer Ultraschallmeßvorrichtung mit zwei Prüfköpfen und mit schematisch als Blockschaltbild darge stellter Elektronik,
- Fig. 2: ein zeitliches Impulsdiagramm der Spannung U am Empfangsteil über der Zeit t für den senkrecht einschallenden Prüfkopf gem. Fig. 1 und
- Fig. 3: ein Diagramm entsprechend Fig. 2, jedoch für den schräg einschallenden Prüfkopf, zeitgleich zu Fig. 2.

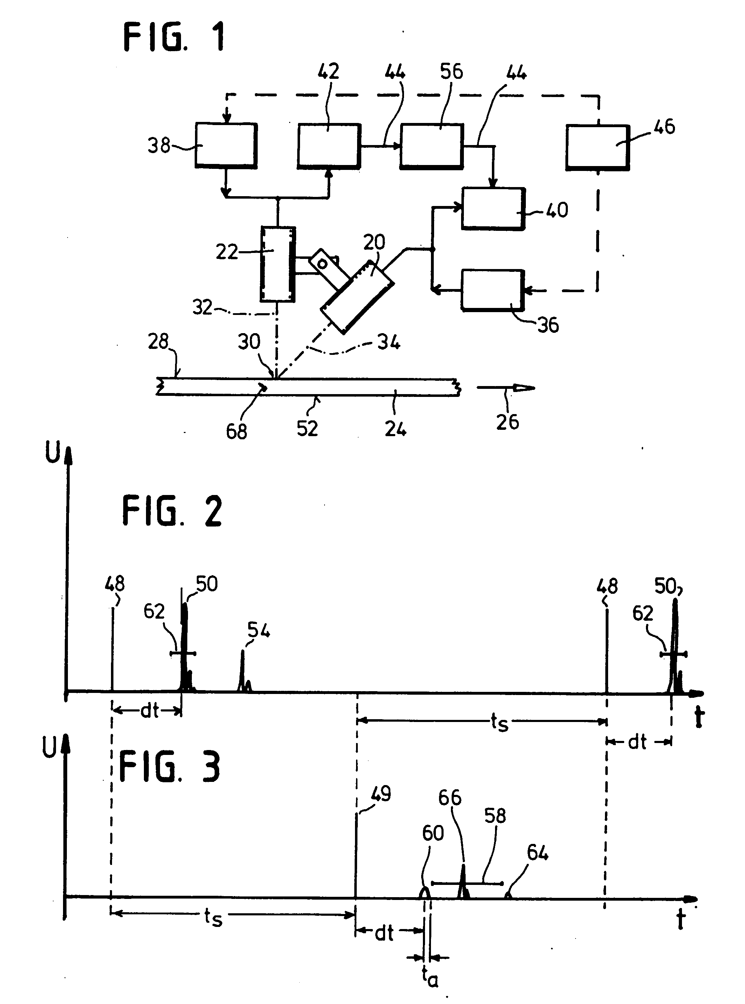

Wie Fig. 1 zeigt, sind zwei Prüfköpfe 20, 22 starr miteinander verbunden und werden relativ zu einem Werkstück 24 bewegt. Zur Erläuterung der Bewegung ist ein Pfeil 26 eingezeichnet, der eine Bewegung des Werkstücks 24 nach rechts andeuten soll. Bei dem Werkstück 24 kann es sich beispielsweise um ein Rohr handeln, das in bekannter Weise mittels einer Rotationsprüfmaschine geprüft wird. In diesem Fall sind die beiden Prüfköpfe 20, 22 in einem Rotor angeordnet, das Werkstück 24 in Form eines Rohres wird axial im Sinne des Pfeiles 26 bewegt.

Der Prüfkopf 20 schallt schräg in die Oberfläche 28 des Werkstücks 24 ein, der Prüfkopf 22 ist dagegen auf einer Normalen zur Oberfläche 28 ausgerichtet, er schallt senkrecht in die Oberfläche 28 ein. Beide Prüfköpfe 20, 22 sind so ausgerichtet, daß ihre Zentralstrahlen sich in einem Punkt 30 auf der Oberfläche 28 schneiden, dieser Punkt 30 ist der Eintrittspunkt der Zentralstrahlen der beiden Prüfköpfe 20, 22 in das Werkstück 24. Die Ankopplung der beiden Prüfköpfe 20, 22 erfolgt in bekannter Weise nach dem Stand der Technik, z. B. über eine Wasservorlaufstrecke. Dadurch wird erreicht, daß ein erheblicher Teil der von jedem Prüfkopf 20, 22 zu gewissen Zeitpunkten abgegebenen Schallenergie in das Werkstück 24 eintritt. Aufgrund der Grenzfläche zwischen Ankopplungsmedium und dem Werkstück 24 wird aber auch ein Teil der Schallenergie reflektiert. Dieser Anteil ist, bei sonst gleicher Ausbildung der Prüfköpfe etc., bei dem senkrecht einschallenden Prüfkopf 22 ungleich größer als bei dem schräg einschallenden Prüfkopf 20, bei dem der reflektierte Anteil im wesentlichen ausgehend vom Punkt 30 nach links oben verläuft, also auf einem Strahl, der spiegelsymmetrisch zum Zentralstrahl 34 verläuft, wobei die Normale 32 die Symmetrieachse darstellt.

Beide Prüfköpfe 20, 22 werden nach dem Impuls-Echo-Verfahren betrieben, sie senden Ultraschallimpulse aus und empfangen die Echos dieser Impulse. Hierzu ist jedem Prüfkopf 20, 22 ein Senderteil 36 bzw. 38 und ein Empfängerteil 40 bzw. 42 zugeordnet, wie Fig. 1 dies zeigt. Über eine Leitung 44, auf die später noch eingegangen wird, ist der Empfängerteil 42 des senkrecht einschallenden Prüfkopfes 22 mit dem Empfängerteil 40 des schräg einschallenden Prüfkopfes 20 verbunden, um die Blende für den Fehlererwartungswert im Empfängerteil 40 des schräg einschallenden Prüfkopfes 20 zu starten. Hierauf wird später noch eingegangen.

Im folgenden werden nun die Impulsverläufe gemäß der Figuren 2 und 3 beschrieben. Ein Taktgeber 46, der aus Fig. 1 ersichtlich ist, sendet in vorgegebenen Intervallen periodische Takte 48, 49 die alternierend dem Senderteil 36 des schräg einschallenden Prüfkopfes 20 oder dem Senderteil 38 des senkrecht einschallenden Prüfkopfes 22 zugeleitet werden und dort praktisch zeitgleich einen, in den Figuren nicht dargestellten Ultraschallimpuls auslösen. Dieser läuft durch die hier nicht näher definierte Vorlaufstrecke und entlang des Zentralstrahls bis zur Oberfläche 28 des Werkstücks 24. Dort wird ein Teil der Schallenergie reflektiert, der Rest tritt in das Werkstück 24 ein. Der reflektierte Anteil führt zu einem ersten, dem auslösenden Taktsignal 48 und damit dem Sendeimpuls nachfolgenden Echo. Im Falle der Fig. 2, die die Verhältnisse bei senkrecht einschallendem Prüfkopf 22 beschreibt, folgt das Eintrittsecho 50 zur Zeit dt nach dem Zeitpunkt des auslösenden Taktes 48. Befindet sich nun im Material des Werkstücks 24 kein irgendwie gearteter Reflektor, so läuft der eingekoppelte Schallimpuls weiter bis zur Rückwand 42, wird dort zumindest teilweise reflektiert, von dem reflektierten Rückwandecho gelangt wiederum ein Teil zum Prüfkopf 22 zurück und bewirkt ein Rückwandecho 54. Die Zeitdifferenz zwischen den Eintrittsecho 50 und dem Rückwandecho 54 kann in bekannter Weise für die Ermittlung der Materialdicke (auch Wanddicke) des Werkstücks 24 herangezogen werden, hierzu wird auf die DE 38 22 699 A1 verwiesen. Für das hier besprochene Verfahren ist jedoch das Eintrittsecho 50 wichtig.

Das Eintrittsecho 50, also das erste Echo, das nach dem Sendeimpuls im Empfängerteil 42 vorliegt, wird in einer Schaltung 56 (siehe Fig. 1) aufbereitet und verzögert, diese Schaltung 56 ist in die Leitung 44 eingefügt, und sodann dem Empfängerteil 40 des schräg einschallenden Prüfkopfes 20 zugeleitet. Hier wird es für die Auslösung einer Fehlererwartungsblende 58 eingesetzt.

Im hier besprochenen Ausführungsbeispiel wird mit einem dem Takt 48 folgenden Takt 49, der um ein ganzzahliges Vielfaches der Taktzeit tₛ nach dem Takt 48 vom Taktgeber 46 abgegeben wird, ein Sendeimpuls des schräg einschallenden Prüfkopfes 20 ausgelöst. Dadurch läuft ein Ultraschallimpuls entlang des Zentralstrahls 34 und tritt teilweise in einem Bereich um den Punkt 30 herum in das Werkstück 24 ein, teilweise erfolgt eine Reflexion. Ein geringer Anteil des reflektierten Impulses erscheint als ein flaches Eintrittsecho 60. Nach dem Stand der Technik wird dieses Eintrittsecho 60 benutzt, um die Fehlererwartungsblende 58 auszulösen, also zu starten. Bei dem hier beschriebenen Verfahren bleibt jedoch das Eintrittsecho 60 unberücksichtigt. Stattdessen wird die Fehlererwartungsblende 58 durch ein Signal der Schaltung 56 ausgelöst, das zum Zeitpunkt dt nach dem Takt 49 erzeugt wird. Die Zeit dt ist dabei, wie oben beschrieben, der zeitliche Abstand zwischen dem Takt 48 und dem Eintrittsecho 50. In einer verbesserten Ausführung ist die Zeit dt der gleitende Mittelwert zwischen den letzten n Zeitdifferenzen zwischen dem jeweiligen Takt 48 (der den Prüfkopf 22 auslöst) und dem Zeitpunkt des Eintrittsechos 50, oder eine andere Verarbeitung mehrerer Werte dt.

In der Schaltung 56 wird das Eintrittsecho 50 bewertet und verarbeitet, um die Zeit dt ermitteln zu können. Die Zeitmessung für dt wird beispielsweise gestoppt, wenn die erste Anstiegsflanke eines häufig aus mehreren Halbwellen bestehenden Eintrittsechos 50 einen vorgegebenen Schwellenwert 62 überschreitet. In anderer Ausbildung kann auch der Zeitpunkt der größten Amplitude des Eintrittsechos 50 für die Beendigung der Zeitmessung von dt herangezogen werden. Ein Verfahren, wie aus dem häufig aus mehreren Halbwellen bestehenden Eintrittsecho 50 ein Stoppsignal für die Zeitmessung von dt abgeleitet werden kann, ist in der DE 35 19 797 A1 beschrieben.

Im hier gezeigten Ausführungsbeispiel sind die Vorlaufstrecken der beiden Prüfköpfe 20, 22 gleich groß. Die Vorlaufstrecken sind auch sonst physikalisch gleichwertig. Ein Ultraschallimpuls braucht nach dem auslösenden Takt 48, 49 also für beide Prüfköpfe 20, 22 diegleiche Zeitspanne, um den Punkt 30 auf der Oberfläche 28 zu erreichen. In diesem Fall wird die Zeitblende 58 (Fehlererwartungsblende) im Empfängerteil 40 des schräg einschallenden Prüfkopfes 20 zum Zeitpunkt dt nach dem Taktsignal 49 gestartet, die eigentliche Fehlererwartungsblende 58 beginnt dann mit einer gewissen zusätzlichen Verzögerungszeit tₐ, die einstellbar ist und den Abfall des Eintrittsechos 60 berücksichtigt, so daß dieses nicht in die Fehlererwartungsblende 58 hineinfällt. Dies ist in Fig. 3 auch so dargestellt. Das Ende der Fehlererwartungsblende 58 ist für die vorliegende Beschreibung ohne Belang, im gezeigten Ausführungsbeispiel endet die Fehlererwartungsblende 58 so ausreichend vor dem Rückwandecho 64, daß dieses wiederum nicht in den Fehlererwartungsbereich hineinfällt. In den Fehlererwartungsbereich hinein fällt das Echo 66 eines Fehlers 68, der sich im Werkstück 24 befindet.

Sind die Vorlaufstrecken der beiden Prüfköpfe 20, 22 nicht gleichlang, wird in der Schaltung 56 eine entsprechende, konstante Zeitspanne tᵥ hinzugefügt, die Fehlererwartungsblende 58 startet dann zum Zeitpunkt dt + tᵥ nach dem auslösenden Taktsignal 49.

Ändert sich der Abstand zwischen dem senkrecht einschallenden Prüfkopf 22 und der Oberfläche 28 des Werkstücks 24, so ändert sich auch die Zeitspanne dt. Innerhalb gewisser, kleiner Änderungen ist es nicht notwendig, diesen Einfluß zu berücksichtigen. Überschreitet der Abstand jedoch eine gewisse Schwelle, muß eine Korrektur durchgeführt werden. Ausgangswert ist dabei stets der Abstand, der beim Justieren der Anlage vorlag. Überschreitet dieser Abstand nun ein gewisses Maß, kann es zu einem fehlerhaften Start der Fehlererwartungsblende kommen, diese wird entweder zu früh oder zu spät gestartet. Um dies zu vermeiden, wird in einer Weiterentwicklung vorgeschlagen, in der Schaltung 56 eine Kompensation für den geänderten Weg vorzunehmen. Hierzu wird das Inkrement betrachtet, um das sich die Zeitspanne dt, wie sie bei der Justierung bestimmt war, geändert hat. Das Inkrement kann positiv oder negativ sein. Es wird mit einem Geometriefaktor, der im wesentlichen eine Winkelfunktion des Einschallwinkels ist, multipliziert, hierdurch wird die aufgrund der Schrägeinschallung größere Vorlaufstreckenänderung des Prüfkopfes 20 gegenüber Abstandsänderungen zwischen dem Prüfkopf 22 und der Oberfläche 28 kompensiert.

## Patentansprüche

1. Verfahren zum Starten einer Zeitblende, insbesondere der Zeitblende für einen Fehlererwartungsbereich (58), bei der Ultraschall-Werkstoffprüfung nach dem Impuls-Echo-Verfahren für einen schräg in die Oberfläche (28) eines Werkstücks (24) einschallenden Prüfkopf (20) der mit einem senkrecht einschallenden Prüfkopf (22) fest verbunden wird, wobei beide Prüfköpfe (20, 22) zum vorgegebenen Zeitpunkt (48, 49) Ultraschallimpulse aussenden und diese anschließend empfangen und das Echosignal (50) des Schalleintritts des senkrecht einschallenden Prüfkopfes (22) für die Auslösung der Zeitblende des schräg einschallenden Prüfkopfes (20) benutzt wird, dadurch gekennzeichnet, daß der senkrecht einschallende Prüfkopf (22) auf denselben Eintrittspunkt (30) an der Oberfläche (28) des Werkstücks (24) ausgerichtet, insbesondere einjustiert ist, wie der schräg einschallende Prüfkopf (20).

2. Verfahren nach Anspruch 1, dadurch gekennzeichnet, daß die beiden Prüfköpfe (20, 22) zeitverzögert Ultraschallimpulse aussenden, daß die Zeitdifferenz der Aussendung von Schallimpulsen erfaßt wird und daß die erfaßte Zeitdifferenz bei der Ermittlung des zeitlichen Auslösepunktes der Zeitblende des schräg einstrahlenden Prüfkopfes (20) herangezogen wird.

3. Verfahren nach Anspruch 1 oder 2, dadurch gekennzeichnet, daß die Prüfköpfe (20, 22) taktweise betrieben werden und daß das Echosignal (50) des Schalleintritts des senkrecht einschallenden Prüfkopfes (22) für die Auslösung der Zeitblende des schräg einschallenden Prüfkopfes (20) in einem Folgetakt benutzt wird.

4. Verfahren nach einem der Ansprüche 1 bis 3, dadurch gekennzeichnet, daß bei Ausfall eines Echosignals (50) des Schalleintritts des senkrecht einschallenden Prüfkopfes (22) das letzte bekannte Eintrittsecho (50) dieses Prüfkopfes (22) für die Auslösung der Zeitblende des schräg einschallenden Prüfkopfes (20) benutzt wird.

5. Verfahren nach einem der Ansprüche 1 bis 4, dadurch gekennzeichnet, daß eine gleitende zeitliche Mittelwertbildung des Echosignales (50) des Schalleintrittes des senkrecht einschallenden Prüfkopfes (22) erfolgt und der gefundene jeweilige Mittelwert für die Auslösung der Zeitblende des schräg einschallenden Prüfkopfes (20) benutzt wird.

6. Verfahren nach einem der Ansprüche 1 bis 5, dadurch gekennzeichnet, daß bei einem Schalleintrittsecho (50) des senkrecht einschallenden Prüfkopfes mit mehreren gleichartigen Halbwellen eine Halbwelle, z. B. diejenige mit größter Amplitude oder die jeweils n-te Halbwelle für die Auslösung der Zeitblende des schräg einschallenden Prüfkopfes (20) benutzt wird.

7. Vorrichtung zur Durchführung des Verfahrens nach einem der Ansprüche 1 bis 6, bei der ein schräg einschallender und ein im wesentlichen senkrecht einschallender Prüfkopf (20, 22) fest miteinander verbunden sind und relativ zu einem Werkstück (24) bewegbar angeordnet sind, wobei der Empfangskanal (42) des senkrecht einschallenden Prüfkopfes (22) mit dem Empfangskanal (40) des schräg einschallenden Prüfkopfes (20) so verbunden ist, daß ein Eintrittsecho (50) des senkrecht einschallenden Prüfkopfes (22) als Triggersignal der Zeitblende für einen Fehlererwartungsbereich (58) des Empfangskanals (40) des schräg einschallenden Prüfkopfes (20) verwendet wird und wobei der schräg einschallende Prüfkopf (20) mit dem senkrecht einschallenden Prüfkopf (22) fest verbunden ist, dadurch gekennzeichnet, daß der schräg einschallende Prüfkopf (20) und der senkrecht einschallende Prüfkopf (22) auf denselben Eintrittspunkt (30) an der Oberfläche (28) eines Werkstücks ausgerichtet, insbesondere einjustiert sind.

8. Vorrichtung Anspruch 7, dadurch gekennzeichnet, daß die Vorlaufstrekken der beiden Prüfköpfe (20, 22) gleichlang einjustiert sind.

9. Vorrichtung zur Durchführung des Verfahrens nach Anspruch 7, dadurch gekennzeichnet, daß der senkrecht einschallende Prüfkopf (22) eine Zeitblende für das Eintrittsecho (50) aufweist.

## Claims

1. A device for activating a time gate, especially an aperture for an expected error range (58), in an ultrasonic testing of materials according to the impulse echo process for a test head (20) which emits pulses that impinge obliquely on a surface (28) of a test body which test head (20) is firmly connected to a test head (22) from which pulses are emitted orthogonally, said two test heads (20, 22) emit at given points of time (48, 49) ultrasonic pulses which are subsequently received, and the echo signal of the entry of the ultrasonic sound for the test head from which the pulses are emitted orthogonally is utilized to trigger the time gate of the test head from which the pulses are emitted in an oblique angle, characterized in that the test head (22) from which pulses are emitted orthogonally is directed, especially justified, to the same point of entry on the surface (28) of the test body (24) as the test head (20) from which pulses are emitted obliquely.

2. A process in accord with Claim 1, characterized by the fact that both test heads (20, 22) emit ultrasonic pulses at time delayed instants, that the difference in transmission time of the sound pulses is recorded and that the recorded time is utilized in determining the point of time at which the time gate of the test head (20) from which the pulses are emitted obliquely is activated.

3. A process in accord with Claim 1 or 2, characterized by the fact that the test heads (20, 22) are operated cyclically, that the echo signal (50) of the entry of the sound pulse of the test head (22) from which pulses are emitted orthogonally is utilized in a following cycle to activate the time gate of the test head (20) from which pulses are emitted obliquely.

4. A process in accord with one of the Claims 1 to 3, characterized by the fact that, in the event that an echo signal (50) of the entry of a sound pulse of the test head (22) from which pulses are emitted orthogonally is absent, the last known echo signal of this test head is utilized to trigger the time gate of the test head (20) from which pulses are emitted obliquely.

5. A process in accord with one of the Claims 1 to 4, characterized by the fact that there results a sliding chronological median value, of the echo signal (50) of the entry signal the test head (22) from which pulses are emitted orthogonally, and that the median value that is obtained in each instance is utilized for activating the time gate of the test head (20) from which pulses are emitted obliquely.

6. A process in accord with one of the Claims 1 to 5, characterized by the fact that for the echo of the entry of sound with several identical half waves of the test head (22) from which pulses are emitted orthogonally, a half wave, for example the one with the greatest amplitude or in each instance the n-th half wave, is utilized for triggering the time gate of the test head (20) from which pulses are emitted obliquely.

7. A device for performing the process in accord with one of the Claims 1 to 6, characterized by the fact that a test head (20) from which pulses are emitted obliquely and a test head (22) from which pulses are emitted in the main orthogonally are connected firmly together, that they are moveable relative to a test body (24), whereby the receiver channel (42) of the test head (22) from which pulses are emitted orthogonally is connected to the receiver channel (40) of the test head (20) from which pulses are emitted obliquely in such a way that an entry echo (50) of the test head (22) from which pulses are emitted orthogonally is utilized to trigger the time gate of the expected error range (58) of the receiver channel (40) of the test head (20) from which the pulses are emitted in an oblique angle and whereby the test head (22) from which the pulses are emitted orthogonally is firmly connected to the test head (20) from which the pulses are emitted obliquely, characterized in that the test head (22) from which pulses are emitted orthogonally is directed, especially justified, to the same point of entry on the surface (28) of the test body (24) as the test head (20) from which pulses are emitted obliquely.

8. Device for performing the process in accord with Claim 7, characterized by the fact that the forward run distances for both test heads (20, 22) are justified to the same length.

9. Device for performing the process in accord with Claim 7, characterized in that the test head (22) from which the pulses are emitted orthogonally is furnished with a time gate for the entry echo.

## Revendications

1. Procédé destiné à activer une fenêtre à temps, en particulier la fenêtre à temps pour une gamme (58) où une erreur est attendue, lors de l'essai aux ultrasons de matériaux selon la méthode par écho d'impulsion pour une probe (20) qui émet des impulsions de manière oblique dans la surface (28) d'une pièce (24) et qui est solidaire d'une probe (22) de laquelle des impulsions sont émises verticalement, les deux probes (20, 22) émettant des impulsions ultrasonores au moment donné (48, 49) et recevant celles-ci ensuite, et le signal d'écho (50) de l'entrée du son de la probe (22) de laquelle des impulsions sont émises verticalement étant utilisé pour le déclenchement de la fenêtre à temps de la probe (20) de laquelle des impulsions sont émises de façon oblique, caractérisé par le fait que la probe (22) de laquelle des impulsions sont émises verticalement est dirigée, en particulier ajustée, sur le même point d'entrée (30) sur la surface (28) de la pièce (24) que la probe (20) de laquelle des impulsions sont émises obliquement.

2. Procédé selon la revendication 1, caractérisé par le fait que les deux probes (20, 22) émettent des impulsions ultrasonores en temps retardé, que la différence de temps de l'émission d'impulsions sonores est enregistrée et que la différence de temps enregistrée est utilisée lors de la détermination du point temporel de déclenchement de la fenêtre à temps de la probe (20) de laquelle des impulsions sont émises obliquement.

3. Procédé selon la revendication 1 ou 2, caractérisé par le fait que les probes (20, 22) sont opérées cycliquement et que le signal d'écho (50) de l'entrée du son de la probe (22) de laquelle des impulsions sont émises verticalement est utilisé dans un cycle suivant pour déclencher la fenêtre à temps de la probe (20) de laquelle des impulsions sont émises obliquement.

4. Procédé selon l'une des revendications 1 à 3, caractérisé par le fait qu'en cas d'absence d'un signal d'écho (50) de l'entrée du son de la probe (22) de laquelle des impulsions sont émises verticalement, c'est le dernier écho d'entrée (50) connu de cette probe (22) qui est utilisé pour déclencher la fenêtre à temps de la, probe (20) de laquelle des impulsions sont émises de façon oblique.

5. Procédé selon l'une des revendications 1 à 4, caractérisé par le fait qu'il y a une formation chronologique glissante de la valeur moyenne du signal d'écho (50) de l'entrée du son de la probe (22) de laquelle des impulsions sont émises verticalement, et que la valeur moyenne obtenue respective est utilisée pour le déclenchement de la fenêtre à temps de la probe (20) de laquelle des impulsions sont émises obliquement.

6. Procédé selon l'une des revendications 1 à 5, caractérisé par le fait que dans le cas d'un écho (50) de l'entrée de son, avec plusieurs demi-ondes similaires, de la probe de laquelle des impulsions sont émises verticalement, on utilise une demi-onde telle que celle qui présente l'amplitude la plus grande ou respectivement la n^{ième} demi-onde pour déclencher la fenêtre à temps de la probe (20) de laquelle des impulsions sont émises de façon oblique.

7. Dispositif pour la mise en oeuvre du procédé selon l'une des revendications 1 à 6, dans le cas duquel une probe (20) de laquelle des impulsions sont émises obliquement et une probe (22) de laquelle des impulsions sont émises pour l'essentiel verticalement sont solidaires l'une de l'autre et sont disposées de façon à pouvoir être déplacées relativement à une pièce (24), le canal de réception (42) de la probe (22) de laquelle des impulsions sont émises verticalement étant relié au canal de réception (40) de la probe (20) de laquelle des impulsions sont émises obliquement, de telle manière qu'un écho d'entrée (50) de la probe (22) de laquelle des impulsions sont émises verticalement est utilisé comme signal de déclenchement de la fenêtre à temps pour une gamme (58) où une erreur est attendue, du canal de réception (40) de la probe (20) de laquelle des impulsions sont émises obliquement, et la probe (20) de laquelle des impulsions sont émises obliquement étant solidaire de la probe (22) de laquelle des impulsions sont émises verticalement, caractérisé par le fait que la probe (20) de laquelle des impulsions sont émises obliquement et la probe (22) de laquelle des impulsions sont émises verticalement sont dirigées, en particulier ajustées, sur le même point d'entrée (30) sur la surface (28) d'une pièce.

8. Dispositif selon la revendication 7, caractérisé par le fait que les pré-courses des deux probes (20, 22) sont ajustées de manière à présenter la même longueur.

9. Dispositif de mise en oeuvre du procédé selon la revendication 7, caractérisé par le fait que la probe (22) de laquelle des impulsions sont émises verticalement présente une fenêtre à temps pour l'écho d'entrée (50).
